# EUROPEAN PATENT APPLICATION

(11) **EP 4 369 555 A1**
(43) Date of publication of application: **15.05.2024**
(21) Application number: 22890192.2
(22) Date of filing: 07.10.2022
(51) Int. Cl.: H02J 7/00, H01M 10/44, H01M 10/42, H01M 10/48, B60L 58/18, B60L 53/30

(54) **BATTERY CHARGING METHOD AND BATTERY SYSTEM PROVIDING BATTERY CHARGING METHOD**

(30) Priority: 08.11.2021 KR 20210152520
(71) Applicant: LG Energy Solution, Ltd., Seoul 07335 (KR)
(72) Inventor: PARK, Jongil, Daejeon 34122 (KR); KIM, Woo Yeol, Daejeon 34122 (KR); KO, Youngjun, Daejeon 34122 (KR); YOU, Donghun, Daejeon 34122 (KR); KO, Juhyeung, Daejeon 34122 (KR)
(74) Representative: Goddar, Heinz J.
(86) International application number: PCT/KR2022/015100
(87) International publication number: WO 2023/080457

(57) **Abstract**

Discussed is a battery charging method and a battery system. The battery system charges battery packs connected in parallel with power from a charger, and includes: a battery that includes the battery packs, each battery pack including a battery module with battery cells and a voltage sensor configured to measure pack voltages, which are voltages of opposite ends of the battery module, and a master battery management system (BMS) configured to set voltage sections by using a lowest pack voltage among the pack voltages and a reference voltage, group the battery packs into charge groups by classifying each of the battery packs as a corresponding voltage section among the voltage sections, and control the battery packs belonging to the charge groups to be charged in an order from a charge group corresponding to a low voltage section to a charge group corresponding to a high voltage section.

## Description

### [Technical Field]

### CROSS-REFERENCE TO RELATED APPLICATION

This application claims priority to and the benefit of Korean Patent Application No. 10-2021-0152520 filed in the Korean Intellectual Property Office on November 08, 2021, the entire contents of which are incorporated herein by reference.

The present invention relates to a method of charging a plurality of battery packs connected in parallel and a battery system for providing the same.

### [Background Art]

In general, a lithium-ion battery charging device charges a battery safely by a constant current (CC)/constant voltage (CV) charging method. For example, a battery is charged with a constant current (CC) of a predetermined intensity I1 (e.g., 1.5 C-rate) when a battery voltage is equal to or less than a reference voltage Vref (e.g., 4.2 V), and is charged with a constant voltage (CV) equal to the reference voltage Vref (e.g., 4.2V) when the battery voltage reaches the reference voltage Vref.

The charging of the battery with the constant current (CC) may be understood as charging the battery with a current of a certain intensity. The battery voltage increases gradually when the battery is being charged with the constant current (CC). The battery is not fully charged even when the battery is charged with the constant current CC and thus the battery voltage reaches the reference voltage Vref (e.g., 4.2 V). When the battery voltage reaches the reference voltage Vref, the lithium-ion battery charging device charges the battery with the constant voltage (CV) to fully charge the battery without causing damage to the performance of the battery.

Meanwhile, when switches (hereinafter, pack switches) connected to a plurality of battery packs connected in parallel are simultaneously turned on to charge the battery packs in a state in which the difference between pack voltages of the plurality of battery packs is greater than or equal to a predetermined reference value, the amount of current (hereinafter, compensation current) flowing between the plurality of battery packs is large and thus the pack switch may be damaged.

When a relay unit that electrically connects a battery system to an external device (e.g., a charger) does not include a precharge resistor, the relay unit may be damaged due to a large amount of current (hereinafter, charging current) (inrush current) flowing to the battery system from the charger when the relay unit is turned on for charging. In addition, when the charger does not have a constant voltage(CV) charging function, the relay unit may be damaged when the relay unit is turned off after charging. Specifically, the relay unit is highly likely to be damaged when the relay unit is turned off in a state in which current (particularly, overcurrent) flows therethrough.

Accordingly, there is a need for a method of charging a plurality of battery packs connected in parallel without causing damage to pack switches and/or a relay unit even when a battery system does not include a precharge resistor and/or when charging is performed using a charger that does not have the constant voltage (CV) charging function.

### [Disclosure]

### [Technical Problem]

The present invention has been made in an effort to provide a battery charging method of charging a plurality of battery packs connected in parallel without causing damage to a plurality of pack switches that connect the plurality of battery packs in parallel to a battery system even when the difference between voltages of the plurality of battery packs is large, and a battery system for providing the same.

The present invention has been made in an effort to provide a battery charging method of charging a battery without causing damage to a main relay even in a battery system that does not include a precharge resistor, and a battery system for providing the same.

The present invention has been made in an effort to provide a battery charging method of charging a battery without causing damage to a main relay even when an external charger that does not have a constant voltage (CV) charging function and has only a constant current (CC) charging function is used, and a battery system for providing the same.

### [Technical Solution]

An example embodiment of the present invention provides a battery system for charging a plurality of battery packs connected in parallel with power from a charger, the battery system including: a battery that includes the plurality of battery packs, each battery pack including a battery module with a plurality of battery cells and a voltage sensor configured to measure a plurality of pack voltages, which are voltages of opposite ends of the battery module, and a master battery management system (BMS) configured to set a plurality of voltage sections by using a lowest pack voltage among the plurality of pack voltages and a reference voltage, group the plurality of battery packs into a plurality of charge groups by classifying each of the plurality of battery packs as a corresponding voltage section among the plurality of voltage sections, and control the plurality of battery packs belonging to the plurality of charge groups to be charged in an order from a charge group corresponding to a low voltage section to a charge group corresponding to a high voltage section.

Th master BMS may set the plurality of voltage sections by adding a multiple of the reference voltage to the lowest pack voltage.

Each battery pack may further include pack switches configured to connect battery modules of the plurality of battery packs in parallel to the battery system, and a slave BMS configured to control the pack switches by transmitting a message indicating the plurality of pack voltages and receiving a signal for controlling the pack switches through communication with the master BMS.

The master BMS may select a charge group corresponding to a lowest voltage section from among a plurality of non-charged charge groups, controls the slave BMS to turn on a pack switch of a battery pack belonging to the selected charge group from among the plurality of battery packs, and transmit a signal requesting to increase an amount of current to the charger to increase a charging current, which is to be supplied from the charger, from a predetermined smallest amount of current to a predetermined largest amount of current for a predetermined preparation time.

The master BMS may transmit a signal requesting to reduce an amount of current to the charger so as to reduce the amount of the charging current from the predetermined largest amount of current to the predetermined smallest amount of current until a predetermined end point in time, when a pack voltage of a battery module that is being charged reaches a maximum voltage of a voltage section corresponding to the selected charge group.

The master BMS may transmit the signal requesting to reduce an amount of current to the charger when the plurality of pack voltages of a plurality of battery modules including the battery module reach a highest charging voltage while the plurality of battery modules are charged.

Another embodiment of the present invention provides a method of charging a plurality of battery packs connected in parallel with power from a charger by a master battery management system (BMS), the method including: a grouping operation of, setting a plurality of voltage sections by using a lowest pack voltage among pack voltages of the plurality of battery packs and a reference voltage, and grouping the plurality of battery packs into a plurality of charge groups by classifying each of the plurality of battery packs as a corresponding voltage section among the plurality of voltage sections, and a charging operation of controlling the plurality of battery packs belonging to the plurality of charge groups to be charged in an order from a charge group corresponding to a low voltage section to a charge group corresponding to a high voltage section.

The group operation may include setting the plurality of voltage sections by adding a multiple of the reference voltage to the lowest pack voltage.

The charging operation may include selecting a charge group corresponding to a lowest voltage section from among a plurality of non-charged charge groups, and connecting the plurality of battery packs belonging to the selected charge group in parallel to the battery system by turning on pack switches of the plurality of battery packs belonging to the selected charge group, and starting charging by transmitting a signal requesting to increase an amount of current to the charger so as to increase a charging current, which is to be supplied from the charger, from a predetermined smallest amount of current to a predetermined largest amount of current for a predetermined preparation time.

After the starting of the charging, the method may further include temporarily stopping the charging by transmitting a signal requesting to reduce the amount of current to the charger so as to reduce the charging current from the predetermined largest amount of current to the predetermined smallest amount of current until a predetermined end point in time, when a pack voltage of a battery module that is being charged reaches a maximum voltage of a voltage section corresponding to the selected charge group.

After the temporarily stopping of the charging, the method may further include determining whether there are more than one non-charged charge group from among the plurality of non-charged charge groups, when it is determined that there is a final non-charged charge group, connecting the plurality of battery packs belonging to the final non-charged charge group in parallel to the battery system by turning on the plurality of pack switches of the plurality of battery packs belonging to the final non-charged charge group, and charging a plurality of battery modules including the battery module by transmitting a signal requesting to increase the amount of current to the charger.

After the charging of the plurality of battery modules, the charging of the plurality of battery modules may be ended by transmitting the signal requesting to reduce the amount of current to the charger when the pack voltages of the plurality of battery modules reach a highest charging voltage.

### [Advantageous Effects]

According to the present invention, a plurality of battery packs connected in parallel can be charged without causing damage to pack switches by grouping the plurality of battery packs into a plurality of charge groups corresponding to predetermined voltage sections on the basis of pack voltages, and controlling the battery packs belonging to the charge groups to be charged in an order from a charge groups corresponding to a low voltage section to a charge groups corresponding to a high voltage section.

According to the present invention, a battery can be charged without causing damage to a main relay by controlling the amount of charging current through communication of a master battery management system (BMS) with an external charger such that the amount of charging current increases gradually in a charging start section and decreases gradually in a charging end section.

### [Description of the Drawings]

FIG. 1 is a drawing for describing a battery charging system according to an example embodiment.
FIG. 2 is a detailed bock diagram of a battery system of FIG. 1.
FIG. 3 is a detailed block diagram of a battery of FIG. 2.
FIG. 4 is a flowchart of a battery charging method according to an example embodiment.
FIG. 5 is a diagram for describing grouping operation S200 of FIG. 4.
FIG. 6 is a detailed flowchart of charging operation S300 of FIG. 4.
FIG. 7 is a diagram for describing a change of the amount of charging current during charging a plurality of battery packs according to the battery charging method of FIG. 4.

### [Mode for Invention]

Hereinafter, example embodiments set forth herein will be described in detail with reference to the accompanying drawings, in which the same or similar constituent elements are assigned the same or similar reference numerals and are not redundantly described here. The term "module" and/or "unit", when used herein to indicate constituent elements, is given or interchangeably used only for ease of writing and should not be understood as having a distinct meaning or function. In the following description of example embodiments of the present invention, well-known functions or constructions are not described in detail when it is determined that they would obscure the gist of these embodiments. The appended drawings are only intended to help the understanding of example embodiments set forth herein and thus it should be understood that the technical idea described herein is not limited by the appended drawings and the present invention covers all modifications, equivalents and alternatives falling within the technical idea and scope of the present invention.

It will be understood that although the terms "first", "second", etc., may be used herein to describe various constituent elements, these constituent elements are not limited by these terms. The terms are only used to distinguish one constituent element from another.

It will be understood that when a constituent element is referred to as being "coupled to" or "connected to" another constituent element, the constituent element may be directly coupled or connected to the other constituent element or there may be another constituent element therebetween. In contrast, it will be understood that when a constituent element is referred to as being "directly coupled to" or "directly connected to" another constituent element, there are no constituent element between the constituent element and the other constituent element.

It will be further understood that the term "comprises" and/or "comprising," when used herein, specifies the presence of stated features, integers, steps, operations, constituent elements, components, or a combination thereof but do not preclude the presence or addition of one or more other features, integers, steps, operations, constituent elements, components, and/or groups thereof.

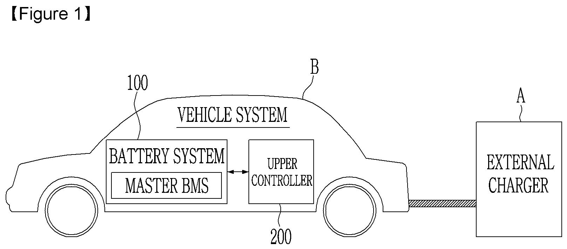

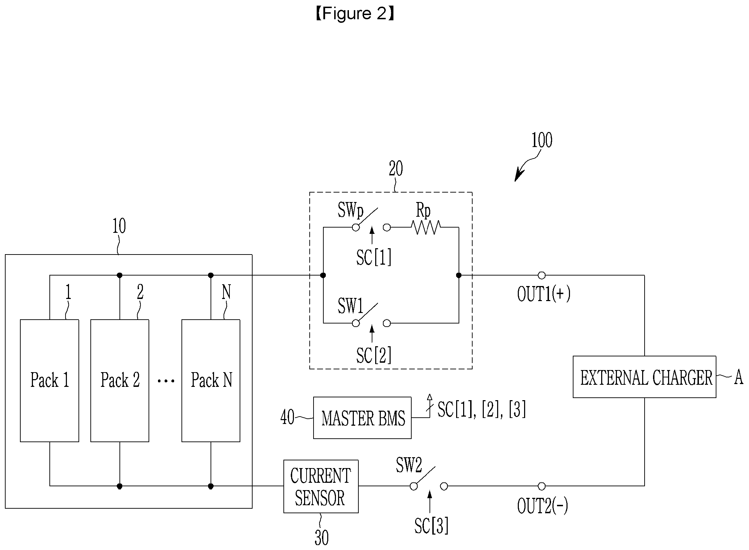

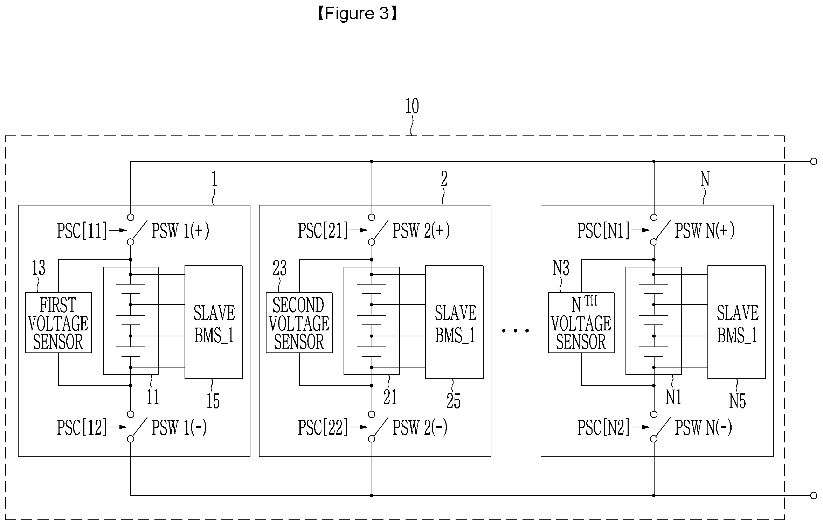

FIG. 1 is a drawing for describing a battery charging system according to an example embodiment, FIG. 2 is a detailed block diagram of a battery system of FIG. 1, and FIG. 3 is a detailed block diagram of a battery bank of FIG. 2.

Referring to FIG. 1, the battery charging system includes an external charger A and a vehicle system B.

The vehicle system B includes a battery system 100 and an upper controller 200. Referring to FIG. 1, the battery system 100 is electrically connected to the external charger A to be charged with power of the external charger A. The battery system 100 may transmit or receive various types of signals and data through communication with the external charger A through the upper controller 200.

Specifically, a master battery management system (BMS) 40, which will be described below, may generally control the battery system 100 and transmit or receive various types of signals and data by communication with the external charger A through the upper controller 200. However, the present invention is not limited thereto, and the master BMS 40 may include a communication module to directly communicate with the external charger A without using the upper controller 200. In this case, the upper controller 200 may include an electronic control unit (ECU) for overall control of the vehicle system B.

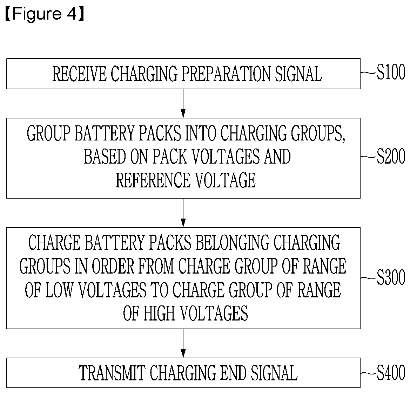

The external charger A may be electrically connected to the battery system 100 to supply power to the battery system 100, thereby charging the battery system 100. According to an example embodiment, the external charger A may include a charger that does not include a constant current (CC) charging function and that includes only a constant voltage (CV) charging function. Even when the external charger A does not include the constant current (CC) charging function, a main relay SW, which will be described below, may be prevented from being damaged due to a charging current supplied from the external charger A at the end of charging when the battery 10 is charged by a charging method to be described with reference to FIG. 4 below.

Referring to FIG. 2, the battery system 100 includes a battery 10, a relay unit 20, a current sensor 30, and a master BMS 40.

The battery 10 may include a plurality of battery packs 1 to N connected in parallel. Hereinafter, when a battery pack among the plurality of battery packs 1 to N is indicated, the battery pack will be assigned reference numeral "j", and a battery module, a voltage sensor, a slave BMS, and a pack switch included in the battery pack j are assigned reference numeral "j1 ", "j3", "j5", and "PSWⱼ", respectively.

Referring to FIG. 3, the battery pack j (e.g., j=1 to N) may include the battery module j1 (e.g., j=1 to N, such as 11 to N1), the voltage sensor j3 (e.g., j=1 to N, such as 13 to N3), the slave BMS j5 (e.g., j=1 to N, such as 15 to N5), and the pack switch PSWj (e.g., j=1 to N). FIG. 3 illustrates that the pack switch PSWj includes a positive-electrode pack switch PSWj(+) and a negative-electrode pack switch PSWj(-) but the present invention is not limited thereto. For example, the pack switch PSWj may include only the positive-electrode pack switch PSWj (+). The battery pack j may further include a pack current sensor to measure a pack current flowing through the battery module j1.

The battery module j1 may include a plurality of battery cells connected in series and/or in parallel. In an example embodiment, the plurality of battery cells may be secondary rechargeable batteries. FIG. 3 illustrates the battery module j1 that includes three battery cells connected in series but the present invention is not limited thereto. The battery module j1 may include various numbers of battery cells.

Each of the plurality of battery cell is electrically connected to the slave BMS j5 through wiring. The slave BMS j5 may transmit various types of battery cell information, including information about a plurality of battery cells, to the master BMS 40. The slave BMS j5 may control a battery cell to be charged or discharge under control of the master BMS 40.

The voltage sensor j3 is connected in parallel to the battery module j1. The voltage sensor j3 may measure pack voltages, i.e., voltages of both ends of the battery module j1, and transmit a result of the measurement to the slave BMS j5.

The slave BMS j5 may communicate with the master BMS 40 to transmit the various types of battery cell information and data including information about the pack voltages and receive various instructions.

According to an example embodiment, the slave BMS j5 may control a switching operation of the pack switch PSWⱼ under control of the master BMS 40. For example, the slave BMS j5 may generate on-level switching control signals PSC[j1] and PSC[j2] to control the pack switch PSWj to be turned on. In this case, the switching operation of the pack switch PSWⱼ may include turning on (closing) or turning off (opening) the pack switch PSWj.

The pack switch PSWⱼ may electrically connect or disconnect the battery module j1 and the battery system 100 to or from each other. For example, when the pack switch PSWⱼ is turned on, the battery module j1 may be connected in parallel to the battery system 100.

In case that the pack switch PSWj includes the positive-electrode pack switch PSWⱼ (+) and the negative-electrode pack switch PSWⱼ (-), the battery module j1 may be connected in parallel to the battery system 100 when the positive-electrode pack switch PSWⱼ (+) and the negative electrode pack switch PSWj (-) are turned on. The battery module j1 may be electrically disconnected from the battery system 100 when at least one of the positive-electrode pack switch PSWj (+) or the negative-electrode pack switch PSWj (-) is turned off.

The relay unit 20 may electrically connect or disconnect the battery system 100 and the external charger A to or from each other. Specifically, the battery 10 may be charged with power from the external charger A when the relay unit 20 electrically connects the battery system 100 and the external charger A to each other.

Referring to FIG. 2, the relay unit 20 may include a precharge relay SWp, a precharge resistor Rp, and a main relay SW. In this case, the precharge relay SWp may perform a switching operation according to a precharge switching control signal SC[1] transmitted from the master BMS 40. The main relay SW may perform a switching operation according to a main switching control signal SC[2] or SC[3] transmitted from the master BMS 40.

When the precharge relay SWp is turned on, the amount of charging current supplied from the external charger A is reduced through the precharge resistor Rp and resultant microcurrent is supplied to the battery 10. Thereafter, the precharge relay SWp is turned off a predetermined time after the main relay SW is turned on. Accordingly, the main relay SW may be prevented from being damaged due to overcurrent (inrush current) supplied from the external charger A.

According to an example embodiment, the relay unit 20 may not include the precharge relay SWp and the precharge resistor Rp. Even in case that the battery system 100 does not include the precharge relay SWp and the precharge resistor Rp, the main relay SW may be prevented from being damaged due to overcurrent (inrush current) supplied from the external charger A at the start of charging when the battery 10 is charged by a charging method to be described with reference to FIG. 4 below.

The main relay SW may electrically connect or disconnect the battery system 100 and the external charger A to or from each other. FIG. 1 illustrates a first main relay SW1 configured to a positive electrode OUT1(+) of the battery system 100 to the external charger A and a second main relay SW2 configured to a negative electrode OUT2(-) of the battery system 100 to the external charger but the present invention is not limited thereto. For example, the main relay SW may include only the first main relay SW1 configured to the positive electrode OUT1(+) of the battery system 100 to the external charger A.

The current sensor 30 is connected in series to a current path between the battery 10 and the external charger A. The current sensor 30 may measure battery current, i.e., charging current Icc or discharge current, which flows through the battery 10 and transmit a result of the measurement to the master BMS 40.

The master BMS 40 may communicate with the external charger A through the upper controller 200 to control charging of the plurality of battery packs 1 to N connected in parallel. Hereinafter, it will be described that the master BMS 40 communicates with the external charger A but the communication of the master BMS 40 with the external charger A may be understood to include a first method of communicating with the external charger A through the upper controller 200 and a second method of directly communicating with the external charger A.

According to an example embodiment, the master BMS 40 may group the plurality of battery packs 1 to N into a plurality of charge groups on the basis of the pack voltages, and control charging of battery packs j belonging to the plurality of charge groups according to a range of voltages of the plurality of charge groups. Thus, the pack switch PSWj may be prevented from being damaged due to overcurrent flowing between the plurality of battery packs 1 to N when the plurality of battery packs 1 to N are connected in parallel. FIGS. 4 to 7 will be described together below for more details.

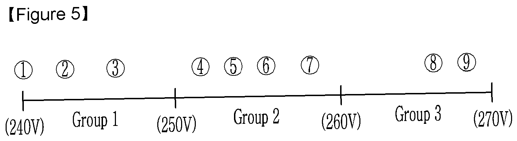

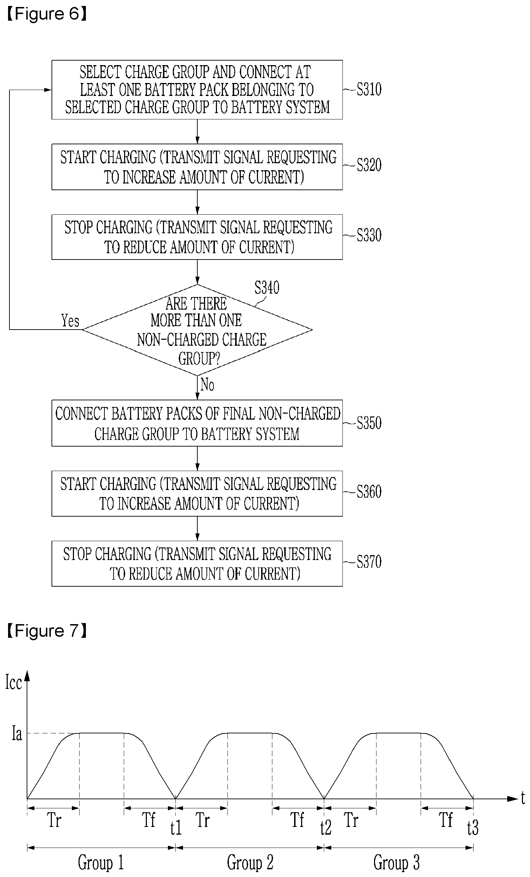

FIG. 4 is a flowchart of a battery charging method according to an example embodiment. FIG. 5 is a diagram for describing grouping operation S200 of FIG. 4. FIG. 6 is a detailed flowchart of charging operation S300 of FIG. 4. FIG. 7 is a diagram for describing a change of the amount of charging current during charging a plurality of battery packs according to the battery charging method of FIG. 4.

Referring to FIG. 4, first, the master BMS 40 receives a charging preparation signal from the external charger A (S100).

The master BMS 40 may communicate with the external charger A through the upper controller 200. Alternatively, the master BMS 40 may include a communication module for communication with the external charger A and thus communicate directly with the external charger A. Hereinafter, it will be understood that when the master BMS 40 is referred to as communicating with the external charger A, the master BMS 40 communicates with the external charger A through the upper controller 200 or directly communicates with the external charger A.

The external charger A may transmit the charging preparation signal to the master BMS 40 when charging is ready. The charging preparation signal may be a signal indicating a chargeable state when the external charger A and the battery system 100 are electrically connected to each other while a physical connection between the external charger A and the battery system 100 is completed. For example, the chargeable state when the external charger A and the battery system 100 are electrically connected to each other may be a state in which a connection terminal for charging is physically fastened with the relay unit 10 and thus the battery 10 can be charged by simply turning on the relay unit 20.

Next, the master BMS 40 groups a plurality of battery packs 1 to N into a plurality of charge groups on the basis of pack voltages and a reference voltage (S200).

The master BMS 40 may receive the pack voltages from the slave BMS j5. The master BMS 40 may extract a lowest pack voltage from among the pack voltages of the plurality of battery packs 1 to N. The master BMS 40 may set a plurality of voltage sections by adding a multiple of the reference voltage to the lowest pack voltage. The master BMS 40 may classify each of the plurality of battery packs 1 to N as a corresponding voltage section among the plurality of voltage sections to group the plurality of battery packs 1 to N into a plurality of charge groups Group1 to GroupN.

The reference voltage may be determined to be a voltage that does not cause damage to a pack switch PSWj due to balancing current. For example, when battery packs, the difference between voltages of which is 10 V or less are connected in parallel, a balancing current flowing between the battery packs may not be high and thus the pack switch PSWⱼ may not be damaged.

For example, when the reference voltage is 10 V, the master BMS 40 may group the plurality of battery packs 1 to N on the basis of an integer multiple of 10 V. Therefore, the difference between voltages of the battery packs belonging to the charge groups may be 10 V or less, and pack switches of the battery packs belonging to the charge groups may be prevented from being damaged due to the balancing current by a method to be described below even when the battery packs belonging to the charge groups are connected in parallel.

Referring to FIG. 5, it is assumed that, for example, pack voltages of first to ninth battery packs 1 to 9 are ① 240 V, ② 244 V, ③ 247 V, ④ 251 V, ⑤ 253 V, ⑥ 256 V, ⑦ 258 V, ⑧ 267 V, and ⑨ 269V, respectively. The master BMS 40 may extract a lowest pack voltage of 240V ① from among the nine pack voltages ① to ⑨). In addition, the master BMS 40 may set first to third voltage sections by adding a multiple (e.g., an integer multiple) of the reference voltage (e.g., 10 V) to the lowest pack voltage of 240V and determine first to third charge groups Group1 to Group3 corresponding to the first to third voltage sections.

The first voltage section may include all voltage sections set by adding one time of the reference voltage (e.g., 10V) to the lowest pack voltage 240V ①. For example, as shown in FIG. 5, the first voltage section may include voltage sections of 240 V or more and less than 250 V. The second voltage section may include voltage sections calculated by adding twice the reference voltage (e.g., 10V) (e.g., 20V) to the lowest pack voltage 240V ①. In this case, the master BMS 40 may set the second voltage section not to include the voltage sections of first voltage section. For example, as shown in FIG. 5, the second voltage section may include voltage sections of 250 V or more and less than 260 V. The third voltage section may include voltage sections calculated by adding three times the reference voltage (e.g., 10 V) (e.g., 30 V) to the lowest pack voltage 240V ①. In this case, the master BMS 40 may set the third voltage section not to include the voltage sections of the first and second voltage sections. For example, as shown in FIG. 5, the third voltage section may include voltage sections of 260 V or more and less than 270 V.

Referring to FIG. 5, the first charge group Group1 may include first to third battery packs 1 to 3. In this case, the pack voltages ①, ②, and ③ of the first to third battery packs 1 to 3 may be included in the first voltage section of 240 V or more and less than 250 V. The second charge group Group2 may include fourth to seventh battery packs 4 to 7. In this case, the pack voltages ④, ⑤, ⑥, and ⑦ of the fourth to seventh battery packs 4 to 7 may be included in the second voltage section of 250 V or more and less than 260 V. The third charge group Group3 may include eighth and ninth battery packs 8 and 9. In this case, the pack voltages ⑧ and ⑨ of the eighth and ninth battery packs 8 and 9 may be included in the third voltage section of 260 V or more and less than 270 V.

Thereafter, the master BMS 40 controls the battery packs belonging to the plurality of charge groups to be charged in an order from a charge group corresponding to a low voltage section to a charge group corresponding to a high voltage section (S300).

Referring to FIG. 6, in operation S300, the master BMS 40 selects a charge group corresponding to a lowest voltage section from among the plurality of charge groups Group1 to GroupN and connects at least one battery pack j belonging to the selected charge group to the battery system 100 (S310).

The master BMS 40 may control the slave BMS j5 to turn on a pack switch PSWj of the at least one battery pack j belonging to the selected charge group. For example, when the slave BMS j5 of the at least one battery pack j belonging to the selected charge group turns on the pack switch PSWj, the at least one battery pack j belonging to the selected charge group may be connected in parallel to the battery system 100. In this case, self-balancing may be performed between a plurality of battery packs j connected in parallel, and pack voltages of the plurality of battery packs j may be the same within a predetermined error range.

In FIG. 5, the master BMS 40 may select the first charge group Group1 corresponding to the lowest voltage section, and control first to third slave BMSs 15, 25, and 35 to turn on first to third pack switches PSW1, PSW2, and PSW3 corresponding to first to third battery packs 1 to 3 belonging to the first charge group Group1. Thus, the first to third battery packs 1 to 3 may be connected in parallel to the battery system 100.

When a selected charge group is a first charge group, the master BMS 40 may control the slave BMS j5 to connect at least one battery pack j belonging to the selected charge group in parallel to the battery system 100 and thereafter control the relay unit 20 to electrically connect the battery system 100 to an external device.

For example in FIG. 5, when the first charge group Group1 is selected, the master BMS 40 may control first to third slave BMSs 15, 25, and 35 to turn on the first to third pack switch PSW1, PSW2, and PSW3 corresponding to the first to third battery packs 1 to 3, and control the relay unit 20 to be turned on. Accordingly, the relay unit 20 may be prevented from being damaged due to an overcurrent of a charger.

In operation S300, the master BMS 40 starts charging by transmitting a signal requesting to increase the amount of current to the external charger A (S320).

The signal requesting to increase the amount of current may be a signal requesting to gradually increase a charging current Icc from a predetermined smallest amount of current to a predetermined largest amount of current for a predetermined preparation time. For example, the predetermined smallest amount of current may be 0 A. The predetermined largest amount of current may be a largest amount of current Ia optimized to charge the battery 10. Therefore, the external charger A may supply the charging current Icc to the battery system 100 to gradually increase the charging current Icc from the predetermined smallest amount of current to the predetermined largest amount of current.

Referring to FIG. 7, the external charger A supplies the charging current Icc to the battery system 100 to gradually increase the charging current Icc for a predetermined preparation time Tr, and supplies a constant amount of the charging current Icc corresponding to the largest amount of current Ia to the battery system 100 when the amount of the charging current Icc reaches the predetermined largest amount of current Ia. That is, when the amount of the charging current Icc reaches the largest amount of current Ia, the external charger A may charge the battery 10 by a constant current CC charging method.

In operation S300, when a pack voltage of a battery pack j that is being charged reaches a maximum voltage of the voltage section corresponding to the selected charge group, the master BMS 40 transmits a signal requesting to reduce the amount of current to the external charger A so as to temporarily stop charging (S330).

The master BMS 40 may receive pack voltages from a plurality of slave BMSs 15 to N5 at certain intervals of time or in real time. For example, a pack voltage of a battery pack that is being charged reaches a maximum voltage of a voltage section corresponding to a selected charge group, the master BMS 40 may transmit the signal requesting to reduce the amount of current to the external charger A. In this case, the maximum voltage of the voltage section corresponding to the selected charge group may correspond to a minimum voltage of a voltage section corresponding to a charge group selected subsequently.

The signal requesting to reduce the amount of current may be a signal requesting to gradually reduce the amount of the charging current Icc from a predetermined largest amount of current Ia to a predetermined smallest amount of current for a predetermined end time. Thus, the external charger A may supply the charging current Icc, the amount of which is gradually reduced from the largest amount of current Ia to the predetermined smallest amount of current to the battery system 100.

Referring to FIG. 5, for example, during charging of the first to third battery packs 1 to 3 included in the first charge group Group1, the master BMS 40 may transmit the signal requesting to reduce the amount of current to the external charger A, when pack voltages of the first to third battery packs 1 to 3 reach a maximum voltage, i.e., 250 V, of the first charge group Group1 or when the difference between the pack voltages and the maximum voltage is a predetermined value or less. In this case, the maximum voltage, i.e., 250 V, of the first charge group Group1 may correspond to a minimum voltage, i.e., 250 V, of a voltage section corresponding to the second charge group Group2 to be selected subsequentially.

Referring to FIG. 7, the external charger A supplies the charging current Icc to the battery system 100 to gradually reduce the amount of the charging current Icc for a predetermined end time Tf, and temporarily stop charging when the amount of the charging current Icc reaches the predetermined smallest amount of current (e.g., 0A). Referring to a current pattern of FIG. 7 during charging of the first charge group Group1, the amount of charging current Icc gradually increases, is maintained constant when the amount of charging current Icc reaches a predetermined largest amount of current Ia, and is gradually reduced to the predetermined smallest amount of current of 0 A when the amount of charging current Icc approximates the largest amount of current Ia at a point in time t1, at which charging is stopped, after a predetermined time lag (e.g., the end time Tf).

In operation S300, the master BMS 40 determines whether there are more than one non-charged charge group (S340).

In operation S300, when it is determined that there is more than one non-charged charge group (S340, Yes), the master BMS 40 performs charging operation S300 again, starting from operation S310. For example, when the charging of the first charge group Group1 ends and thus charging is temporarily stopped, the number of charge groups that are not charged include the second charge group Group2 and the third charge group Group3. Because there are more than one non-charged charge group, the master BMS 40 may select the second charge group Group2 as a target to be charged subsequentially. In this case, the master BMS 40 may perform operations S310, S320, and S330 on the second charge group Group2.

Specifically, referring to FIGS. 5 and 7, the master BMS 40 controls the fourth to seventh slave BMSs 45, 55, 65, and 75 to turn on the fourth to seventh pack switches PSW4, PSW5, PSW6, and PSW7 corresponding to the fourth to seventh battery packs 4 to 7 at a point in time t1 at which charging of the second charge group Group2 begins, and transmits a signal requesting to increase the amount of current to the external charger A (S320).

When the fourth to seventh pack switches PSW4, PSW5, PSW6, and PSW7 are turned on while the first to third pack switches PSW1, PSW2, and PSW3 are on, the first to seventh battery packs 1 to 7 may be connected in parallel to the battery system 100. Referring to FIG. 5, when pack voltages of the first to seventh battery packs 1 to 7 reach a maximum voltage, e.g., 260 V, of a voltage section corresponding to the second charge group Group2, the master BMS 40 transmits a signal requesting to reduce the amount of current to the external charger A (S330).

Although FIG. 7 illustrates a second charge group Group2, it should be understood to mean that the second charge group Group2 is newly added in a charging process, and actually, first to seventh battery packs 1 to 7 belonging to a first charge group Group1 and the second charging group Group2 may be charged in a voltage section corresponding to the second charge group Group2. Referring to a current pattern during charging of the second charge group Group2, the amount of charging current Icc gradually increases, is maintained constant when the amount of charging current Icc reaches a predetermined largest amount of current Ia, and is gradually reduced to a predetermined smallest amount of current of 0 A when the amount of charging current Icc approximates the largest amount of current Ia at a point in time t2, at which charging is stopped, after a predetermined time lag (e.g., the end point Tf).

In operation S300, when it is determined that there is one non-charged charge group (S340, No), the master BMS 40 controls at least one battery pack j belonging to a remaining final non-charged charge group to be connected to the battery system 100 (S350).

For example, the master BMS 40 selects eighth and ninth battery packs 8 and 9 belonging to a third charge group Group3, which is a remaining non-charged charge group, while the first to seventh battery packs belonging to the first and second charge groups Group1 and Group2 are connected to the battery system 100. In addition, the master BMS 40 may control the eighth and ninth slave BMSs 85 and 95 to turn on eighth and ninth pack switches PSW8 and PSW9. In this case, the first to ninth battery packs 1 to 9 are connected in parallel to one another, and self-balancing is performed between the first to ninth battery packs 1 to 9. As a result, pack voltages of the first to ninth battery packs 1 to 9 may be the same within a predetermined error range.

In operation S300, the master BMS 40 transmits a signal requesting to increase the amount of current to the external charger A (S360).

In operation S300, when pack voltages of a plurality of battery packs 1 to N that are being charged reach a highest charging voltage, the master BMS 40 transmits a signal requesting to reduce the amount of current to the external charger A (S370).

The highest charging voltage may be a maximum voltage at which the battery 10 can be charged not to be damaged and may be preset according to a predetermined standard. For example, it is assumed that the highest charging voltage is 290 V. Referring to FIG. 5, unlike in operation S330, the master BMS 40 may not stop charging even when the pack voltages of the first to ninth battery packs 1 to 9 reach a maximum voltage, e.g., 270 V, of a voltage section corresponding to the third charge group Group3. The master BMS 40 may maintain charging until the pack voltages of the first to ninth battery packs 1 to 9 reach the highest charging voltage of 290V, and transmit the signal requesting to reduce the amount of current to the external charger A when the pack voltages of the first to ninth battery packs 1 to 9 reach the highest charging voltage of 290V. For example, in FIG. 7, the pack voltages of the first to ninth battery packs 1 to 9 may be 290 V at a point in time t3 at which charging of the third charge group Group3 is stopped.

Although FIG. 7 illustrates the third charge group Group3, it should be understood to mean that the third charge group Group3 is newly added in a charging process, and actually, the first to ninth battery packs 1 to 9 belonging to the first to third charge groups Group1, Group2 and Group3 may be charged in a voltage section corresponding to the third charge group Group3.

Next, the master BMS 40 transmits a charging end signal to the external charger A (S400).

The charging end signal may be a signal requesting to end charging because there is no battery pack to be charged. In this case, when the charging end signal is transmitted, the master BMS 40 may turn off the relay unit 20 before or after the transmission of the charging end signal.

In FIGS. 4 and 6, operations S370 and S400 are differentiated from each other but the present invention is not limited thereto. For example, the master BMS 40 may transmit the signal requesting to reduce the amount of current with respect to the third charge group Group3 to the external charger A (S370) and thereafter transmit the charging end signal (S400). As another example, the master BMS 40 may transmit the charging end signal to the external charger A, together with the signal requesting to reduce the amount of current with respect to the third charge group Group3.

While example embodiments of the present invention have been described above in detail, the scope of the present invention is not limited thereto and changes and modifications made by those of ordinary skill in the art fall within the scope of the present invention.

## Claims

1. A battery system for charging a plurality of battery packs connected in parallel with power from a charger, the battery system comprising:
a battery comprising the plurality of battery packs, each battery pack including a battery module with a plurality of battery cells and a voltage sensor configured to measure a plurality of pack voltages, which are voltages of opposite ends of the battery module; and
a master battery management system (BMS) configured to:
set a plurality of voltage sections by using a lowest pack voltage among the plurality of pack voltages and a reference voltage,
group the plurality of battery packs into a plurality of charge groups by classifying each of the plurality of battery packs as a corresponding voltage section among the plurality of voltage sections, and
control the plurality of battery packs belonging to the plurality of charge groups to be charged in an order from a charge group corresponding to a low voltage section to a charge group corresponding to a high voltage section.

2. The battery system of claim 1, wherein:
the master BMS sets the plurality of voltage sections by adding a multiple of the reference voltage to the lowest pack voltage.

3. The battery system of claim 1, wherein:
each battery pack further comprises:
a pack switch configured to connect the battery module in parallel to the battery system; and
a slave BMS configured to control the pack switch by transmitting a message indicating the plurality of pack voltages and receiving a signal for controlling the pack switch through communication with the master BMS.

4. The battery system of claim 3, wherein:
the master BMS:
selects a charge group corresponding to a lowest voltage section from among a plurality of non-charged charge groups,
controls the slave BMS to turn on a pack switch of a battery pack belonging to the selected charge group from among the plurality of battery packs, and
transmits a signal requesting to increase an amount of current to the charger to increase a charging current, which is to be supplied from the charger, from a predetermined smallest amount of current to a predetermined largest amount of current for a predetermined preparation time.

5. The battery system of claim 4, wherein:
the master BMS:
transmits a signal requesting to reduce an amount of current to the charger so as to reduce the amount of the charging current from the predetermined largest amount of current to the predetermined smallest amount of current until a predetermined end point in time, when a pack voltage of a battery module that is being charged reaches a maximum voltage of a voltage section corresponding to the selected charge group.

6. The battery system of claim 3, wherein:
the master BMS:
transmits the signal requesting to reduce an amount of current to the charger when the plurality of pack voltages of a plurality of battery modules including the battery module reach a highest charging voltage while the plurality of battery modules are charged.

7. A method of charging a plurality of battery packs connected in parallel with power from a charger by a master battery management system (BMS), the method comprising:
a grouping operation of,
setting a plurality of voltage sections by using a lowest pack voltage among pack voltages of the plurality of battery packs and a reference voltage, and
grouping the plurality of battery packs into a plurality of charge groups by classifying each of the plurality of battery packs as a corresponding voltage section among the plurality of voltage sections; and
a charging operation of controlling the plurality of battery packs belonging to the plurality of charge groups to be charged in an order from a charge group corresponding to a low voltage section to a charge group corresponding to a high voltage section.

8. The method of claim 7, wherein:
the group operation comprises setting the plurality of voltage sections by adding a multiple of the reference voltage to the lowest pack voltage.

9. The method of claim 7, wherein:
the charging operation comprises:
selecting a charge group corresponding to a lowest voltage section from among a plurality of non-charged charge groups, and connecting the plurality of battery packs belonging to the selected charge group in parallel to a battery system by turning on pack switches of the plurality of battery packs belonging to the selected charge group; and
starting charging by transmitting a signal requesting to increase an amount of current to the charger so as to increase a charging current, which is to be supplied from the charger, from a predetermined smallest amount of current to a predetermined largest amount of current for a predetermined preparation time.

10. The method of claim 9, further comprising,
after the starting of the charging,
temporarily stopping the charging by transmitting a signal requesting to reduce the amount of current to the charger so as to reduce the charging current from the predetermined largest amount of current to the predetermined smallest amount of current until a predetermined end point in time, when a pack voltage of a battery module that is being charged reaches a maximum voltage of a voltage section corresponding to the selected charge group.

11. The method of claim 10, further comprising,
after the temporarily stopping of the charging,
determining whether there are more than one non-charged charge group from among the plurality of non-charged charge groups;
when it is determined that there is a final non-charged charge group, connecting the plurality of battery packs belonging to the final non-charged charge group in parallel to the battery system by turning on the plurality of pack switches of the plurality of battery packs belonging to the final non-charged charge group; and
charging a plurality of battery modules including the battery module by transmitting a signal requesting to increase the amount of current to the charger.

12. The method of claim 11, further comprising,
after the charging of the plurality of battery modules,
ending the charging of the plurality of battery modules by transmitting the signal requesting to reduce the amount of current to the charger when the pack voltages of the plurality of battery modules reach a highest charging voltage.
